(19) **Europäisches Patentamt / European Patent Office / Office européen des brevets**

(11) **EP 1 281 843 B1**

(12) **FASCICULE DE BREVET EUROPEEN**

(45) Date de publication et mention
de la délivrance du brevet:
**11.03.2009 Bulletin 2009/11**

(51) Int Cl.:
*F01N 9/00* *(2006.01)*    *F01N 3/023* *(2006.01)*

(21) Numéro de dépôt: **02291929.4**

(22) Date de dépôt: **30.07.2002**

(54) **Procédé de détermination du chargement d'un filtre à particules**

Verfahren zur Bestimmung des Beladungszustandes eines Partikelfilters

Method to determine the loading state of a particulate filter

(84) Etats contractants désignés:
**BE DE ES GB IT**

(30) Priorité: **01.08.2001 FR 0110286**

(43) Date de publication de la demande:
**05.02.2003 Bulletin 2003/06**

(73) Titulaire: **RENAULT S.A.S.**
**92100 Boulogne Billancourt (FR)**

(72) Inventeurs:
• **Hekimian, Georges**
**92300 Levallois (FR)**
• **Bartsch, Arno**
**91510 Lardy (FR)**
• **Blanchon, Sylvain**
**92500 Rueil Malmaison (FR)**

(56) Documents cités:
**EP-A- 0 587 146**    **EP-A- 1 081 347**
**EP-A- 1 103 702**

• **PONTIKAKIS, KOLTSAKIS, STAMATELOS: "Dynamic Filtration Modeling in Foam Filters for Diesel Exhaust" CHEM. ENG. COMM., [en ligne] vol. 00, 2001, pages 1-26, XP002196576 Extrait de l'Internet: <URL:http://www.mie.uth.gr/labs/ltte/ltte- eng/info/..%5Cpubs%5Ct011009d.pdf> [extrait le 2002-04-18]**

## Description

La présente invention concerne le domaine de l'épuration des gaz d'échappement d'un moteur à combustion interne, par exemple de véhicule automobile, et plus particulièrement un procédé pour déterminer le chargement en suies d'un filtre à particules.

La présence d'un filtre à particules dans la ligne d'échappement d'un moteur à combustion interne en particulier d'un moteur diesel, permet de diminuer considérablement la quantité des particules, poussières et autres suies émises dans l'atmosphère et de satisfaire ainsi aux normes antipollution.

Au cours du fonctionnement du moteur à combustion interne, le filtre à particules se charge progressivement d'hydrocarbures imbrûlés dont l'accumulation finit par dégrader les performances du filtre et celles du moteur car se traduisant par une augmentation de la pression différentielle entre l'amont et l'aval du filtre et donc de la contre pression d'échappement du moteur. Il s'avère donc nécessaire de régénérer périodiquement le filtre, opération qui est effectuée par la mise en combustion des particules dans le filtre.

Cette régénération thermique est de préférence effectuée seulement lorsque le filtre atteint une certaine charge qui peut être déterminée en fonction de la perte d'efficacité du filtre, en fonction de l'augmentation de la pression différentielle ou en fonction d'un risque de destruction du filtre par échauffement excessif lors de la régénération par combustion d'une quantité trop importante de particules de suies.

Classiquement, une opération de régénération est déclenchée au bout d'un certain intervalle de temps, ou de distance parcourue, mais sans tenir compte de la charge réelle du filtre, ce qui aboutit à tenir compte des conditions les pires pouvant survenir et à régénérer le filtre fréquemment.

Ainsi, il est important de maîtriser au mieux le déclenchement des phases de régénération pour éviter des régénérations trop fréquence surconsomatrices de carburant. Il est donc avantageux de déterminer au plus juste le niveau de chargement du filtre à particule pour déclencher les phases de régénération uniquement lorsque le chargement maximum autorisé est atteint.

Des procédés et des dispositifs ont donc été développés pour optimiser les opérations de régénération utilisant une estimation du chargement réel du filtre, estimation de la charge notamment déduite de la nature de la pression différentielle régnant entre l'amont et l'aval du filtre.

On connaît ainsi par le document EP-587146, un procédé de régénération d'un filtre à particules équipant un moteur atmosphérique ou turbochargé. Selon ce document, la régénération du filtre est déclenchée sitôt que le chargement du filtre excède une valeur prédéterminée. Ce chargement est déduit de la pression différentielle régnant entre l'entrée et la sortie du filtre, notée ΔP, par la relation suivante ΔP = c*A,
c = chargement du filtre
A = grandeur caractéristique de l'écoulement des gaz à travers le moteur .

A est déterminé en fonction du rapport entre le produit du régime du moteur par la pression dans le collecteur d'admission et par la température moyenne entre l'amont et l'aval du filtre à particules, et le produit de la température dans le collecteur d'admission par la pression en amont du filtre à particules.

Le document EP-1103702 décrit un procédé similaire.

Cependant, le fonctionnement du moteur, les régénérations successives ainsi qu'éventuellement l'utilisation d'additifs de carburant pour permettre la régénération du filtre à particule encrassent le filtre de résidus non combustibles et diminue sa capacité de filtration. Aucun des dispositifs de l'art antérieur ne prend en compte cet encrassement dans la détermination du niveau de chargement du filtre ce qui conduit à une augmentation inutile de la fréquence des phases de régénération et donc à une surconsommation de carburant et dans certain cas à une dégradation du filtre à particules.

La présente invention a pour objet de déterminer le chargement d'un filtre à particules de façon plus précise que l'art antérieur connu.

Le procédé de détermination du chargement en suies, selon l'invention, est destiné à un filtre à particules, du type utilisé en aval d'un moteur à combustion interne, le filtre devant être régénéré périodiquement par combustion des suies avant d'atteindre un chargement trop élevé.

Ce but est atteint par un procédé de détermination du chargement en suies d'un filtre à particules, du type utilisé en aval d'un moteur à combustion interne, le filtre devant être régénéré périodiquement par combustion des suies avant d'atteindre un chargement trop élevé, par lequel le chargement m est déduit de la pression différentielle ΔP amont-aval du filtre à particules et d'une grandeur Qvol représentative du débit des gaz traversant le filtre à particules, caractérisé en ce que le chargement est déduit de la formule suivante :

$$\Delta P = f(Qvol, m)$$

dans laquelle m correspondant à la masse de suies piégées dans le filtre à particules,

la fonction f(Qvol,m) comprenant au moins un jeu de coefficients déterminés par expérience qui prend en compte la réduction du volume utile du filtre à particules liée à l'accumulation de résidus non combustibles dans le filtre.

Selon une autre variante de réalisation, la valeur seuil de déclenchement de la phase de régénération est déterminée en fonction du volume utile ($V_{uitle}$) du filtre à particule définie par la formule :

$$V_{utile}=V_{FàP}\cdot(Vres/1000)/b$$

dans laquelle $V_{FàP}$ représente le volume initial du filtre à particule,

$V_{res}$ représente le volume des résidus défini par la formule $m_{res}/\rho_{res}$

$m_{res}$ représente la masse de résidus accumulés dans le filtre à particules

b représente la fraction, en volume, du filtre à particules qui peut être occupée par les résidus.

D'autres particularités et avantages de la présente invention apparaîtront plus clairement dans la description ci-après faite en référence au dessin annexé dans lequel :

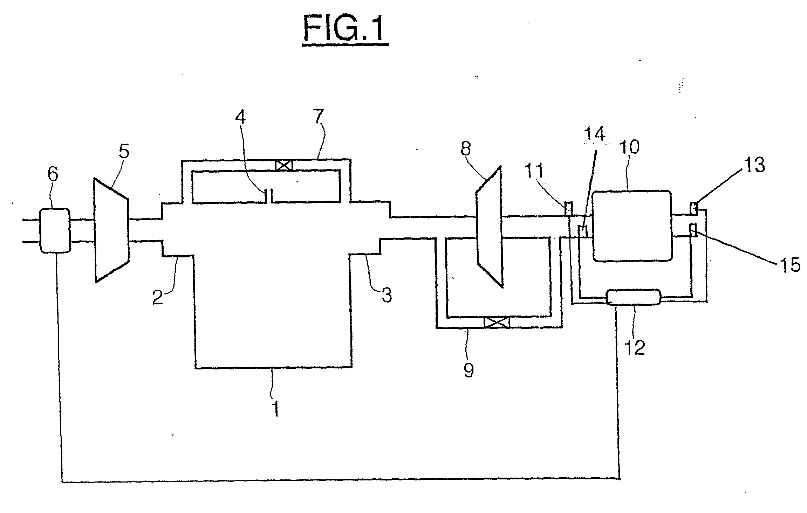

la figure 1 représente un schéma d'un moteur à combustion interne équipé d'un filtre à particules apte à mettre en oeuvre le procédé selon l'invention.

Comme on peut le voir sur la figure 1, un moteur 1 pourvu d'un collecteur d'admission 2, d'un collecteur d'échappement 3, et d'un système d'injection 4, est alimenté en air par un compresseur 5 en amont duquel se trouve disposé un débitmètre d'air 6 apte à mesurer le débit massique d'air frais entrant Mail. Dans l'exemple de réalisation de la figure 1, le moteur 1 est équipé d'un système de recirculation des gaz d'échappement qui se présente sous la forme d'un bipasse 7 disposé entre le collecteur d'échappement 3 et le collecteur d'admission 2, qui permet d'introduire dans le collecteur d'admission 2 une fraction des gaz issus de la combustion se trouvant dans le collecteur d'échappement 3. Le by-pass 7 est commandé par une unité électronique de commande du moteur.

Le collecteur d'échappement 3 est relié à une turbine 8 entraînant en rotation le compresseur 5. Dans l'exemple de réalisation de la figure 1, la turbine est pourvue d'un by-pass.

Un filtre à particule 10 est disposé en aval de la turbine 8. Un capteur 11 respectivement 13 de température et un capteur 14, respectivement 15 de pression son placé en amont respectivement en aval du filtre 10 à particules, ces capteurs 12, 13, 14, 15 fournissent des signaux représentatif de la température et de la pression amont et aval à l'unité électronique de commande 12 du moteur 1. L'unité 12 de commande électronique reçoit également le signal généré par le débitmètre 6.

Un catalyseur d'oxydation non représenté peut être disposé sur la ligne d'échappement en amont ou en aval du filtre 10 à particules. De même, le filtre à particules 10 peut comporter une imprégnation catalytique.

L'unité 12 de commande électronique comporte des moyens de mémorisation et des moyens de calculs par lesquels il exploite les informations précitées pour estimer le chargement du filtre à particule et déclencher des moyens de régénération de ce dernier lorsque ce chargement excède une valeur prédéterminée.

La demanderesse a constaté que le procédé de l'art antérieur pour déterminer le chargement du filtre à particules n'était pas satisfaisant. En effet, comme expliqué précédemment le fonctionnement du moteur, les régénération successive et certains moyens de régénération encrassent le filtre à particules 10. Cet encrassement se traduit par l'accumulation de résidus non combustibles dans les canaux du filtre à particules 10 en réduisant ainsi sa capacité de filtration.

Une méthode de régénération connue utilise en additif, le Cérium, ajouté au carburant pour abaisser la température de combustion de suit. Cet additif ainsi que l'huile inévitablement brûlée lors du fonctionnement du moteur introduise dans les gaz d'échappement des composés métalliques non combustibles qui forment les résidus. De même, des cendres résultant de la combustion des suies dans le filtre à particules peuvent également former des résidus dans les canaux du filtre à particules.

Cette accumulation de résidus dans les canaux a pour conséquent de modifier la perte de charge aux deux extrémités du filtre à particules. Or, selon l'art antérieur la perte de charge est utilisée pour déterminer le niveau de chargement du filtre à particules. Par conséquent, la présence de résidus perturbe la correspondance entre la perte de charge et le niveau de chargement du filtre à particules. En effet, à débit volumique identique et à chargement égale, l'accumulation de résidus se traduit par une augmentation de la perte de charge par rapport à un filtre à particules sans résidus.

Ainsi, les stratégies de reconnaissance de chargement de l'art antérieur qui donnent de bon résultat avec un filtre à particules neuf, surestiment le niveau de chargement du filtre à particules lorsque se dernier se charge en résidus. Comme expliqué précédemment, cette surestimation conduit à une augmentation du nombre de régénération et donc à une surconsommation de carburant.

Le principe de l'invention est donc de prendre en compte le vieillissement du filtre à particules qui se traduit , notamment, par l'accumulation progressive des résidus dans le procédé de reconnaissance du niveau de chargement du filtre à particules.

Ainsi selon le procédé selon l'invention l'estimation du niveau de chargement est donnée à partir de la relation :

$$(1)\ \Delta P = f(Qvol,\ m)$$

m : masse de suies accumulée dans le filtre à particules
Qvol : débit volumique traversant le filtre à particules

Cette relation est ensuite calibrée, par l'intermédiaire de coefficients appropriés qui prennent en compte le niveau de vieillissement du filtre à particules représenté notamment par la quantité de résidus accumulés dans le filtre à particules. Ces coefficients sont déterminés à partir d'essais pour déterminer la quantité de résidus en fonction de la distance parcourue par le véhicule.

Au final, on obtient une cartographie ou un modèle pour chaque coefficient en fonction de la quantité de résidus.

Selon un autre mode de réalisation, la modélisation du niveau de chargement est donnée par l'équation parabolique suivante :

$$(2)\ \Delta P = (a_1 \times m^2 + a_2 \times m + a_3)Qvol^2 + (a_4 \times m + a_5)Qvol$$

$\Delta P$ : différentiel de pression entre l'amont et l'aval du filtre à particules
m : masse de suies accumulée dans le filtre à particules
Qvol : débit volumique traversant le filtre à particules

Les $a_j$ correspondent à des coefficients correcteurs qui prennent en compte le vieillissement du filtre à particule se traduisant par une diminution de son volume utile par l'accumulation de résidus. Dans la pratique, les valeurs des coefficients $a_i$ sont calculées à partir de résultats de tests et/ou d'essais. Ces tests et essais ont pour objectif de quantifier l'usure du filtre à particules en fonction de la distance parcouru.

Au final, on obtient une cartographie ou un modèle pour chaque coefficient en fonction de la quantité de résidus.

Selon une variante de réalisation, ainsi, un jeu de coefficients $a_j$ est déterminé pour chaque tranche successive, par exemple de 10000km parcouru.

Ainsi, pour une tranche déterminée de kilométrage, par exemple 0 à 9999km ou 10000 à 19999km ou 20000 à 29999km etc., le niveau de chargement du filtre à particules est déterminé par des couples de mesure $\Delta P$, Qvol et le modèle ou la cartographie associés avec les coefficients $a_i$ correspondants. De même que pour la demande de brevet FR2781251 déposé par la demanderesse la valeur de la masse de suie m est retrouvée à partir d'au moins trois couples de mesures $\Delta P$, Qvol. En effet, la relation (2) est parabolique. Les couples de mesure doivent être suffisamment rapprochés dans le temps pour bien correspondre au niveau de chargement du filtre.

Ainsi, pour déterminer la masse de suie accumulée dans le filtre à particule, une étape d'acquisition est déclenché pour acquérir pendant une période de temps maximum déterminée au moins trois couples de mesures $\Delta P$, Qvol. La masse de suie m est ensuite retrouvée par l'intermédiaire de la relation (2) en fonction des valeurs des coefficients $a_i$.

Ainsi, on comprend la masse de suie m est déterminée avec plus de précision puisqu'elle prend en compte le niveau de vieillissement du filtre à particules.

Selon une variante de réalisation, le débit volumique Qvol peut être déterminé à partir de la relation suivante :

$$Qvol = (Mair + Mc)TN/P$$

dans laquelle Mair représente le débit d'air entrant dans le moteur
Mc représente le dédit de carburant introduit dans les chambres de combustion du moteur
T représente la température des gaz d'échappement en amont du filtre à particules
P représente la pression en amont du filtre à particules
N représente le régime moteur.

Cette relation est décrite dans le brevet français FR2781251 déposé par la demanderesse. Cette relation permet de prendre en compte uniquement le débit des gaz entrants réellement dans le filtre à particules.

Comme expliqué précédemment, une phase de régénération est déclenchée lorsque que la masse de particules atteint une valeur déterminée. Selon l'art antérieur, cette valeur est fixe pour l'ensemble des régénération et déterminée lorsque le filtre à particule est neuf. En fait, ce seuil correspond à une densité de particules dans le filtre favorable à une régénération optimale. En effet, une densité trop importante provoque un dégagement important de chaleur qui provoque une dégradation du filtre. Selon l'art antérieur, lors du vieillissement du filtre et en conservant le seuil défini pour un filtre neuf, la densité de particules au moment d'une régénération sera supérieure à la densité optimale. De ce fait, plus la quantité de résidus sera important plus la densité de particules au moment des particules sera importante et donc plus grand sera le risque de dégradation du filtre à particules.

Le principe de l'invention est de conserver une densité de particules constante lors des phases de régénération successives afin de conserver les conditions optimales de régénération et donc de préserver l'intégrité du filtre à particules. Pour ce faire, le niveau maximum de chargement est déterminé à partir de la détermination du volume utile du filtre à particules, calculé par la relation suivante :

$$V_{utile} = V_{FàP} - (Vres/1000)/b$$

dans laquelle $V_{FàP}$ représente le volume initial du filtre à particule,

$V_{res}$ représente le volume des résidus définie par la formule $m_{res}/\rho_{res}$

$m_{res}$ représente la masse de résidus accumulés dans le filtre à particules

b est une constante et représente la fraction, en volume, du filtre à particules qui peut être occupée par les résidus.

Ainsi, à partir de la valeur du volume utile $V_{utile}$ et en partant du principe que la densité de particules au moment des régénérations est une constante dans le temps, on en déduit la masse maximum admissible de particules. On comprend donc que la valeur seuil varie au cours du temps en fonction du vieillissement du filtre à particules.

b dépend des caractéristiques et de la géométrie du filtre à particules et est, par exemple, de l'ordre de 0,3.

Comme expliqué précédemment, la quantité de résidus accumulés dans le filtre à particules dépend notamment de la quantité de carburant consommé. En effet, la quantité de résidus est directement lié au fonctionnement du moteur. Par conséquent, $m_{res}$ peut être déterminé en fonction de la quantité de carburant consommé.

Dans l'hypothèse où l'on considère que les résidus sont essentiellement constitués par des résidus d'additifs, par exemple de Cérium, on obtient :

$$m_{res} = qCarb \times 0.84 \times 10^3 \times 30.10^{-6} \times 172/140$$

$$\rho_{res} = 0,39 g/cm^3$$

qCarb représente la quantité de carburant depuis la mise en service du filtre à particule.

Bien entendu, l'invention n'est pas limitée au mode de réalisation qui vient d'être décrit qu'à titre d'exemple.

**Revendications**

**1.** Procédé de détermination du chargement en suies d'un filtre à particules (10), du type utilisé en aval d'un moteur à combustion interne (1), le filtre devant être régénéré périodiquement par combustion des suies avant d'atteindre un chargement trop élevé, par lequel le chargement est déduit de la pression différentielle ΔP amont-aval du filtre à particules (10) et d'une grandeur Qvol représentative du débit des gaz traversant le filtre à particules, **caractérisé en ce que** le chargement est déduit de la formule suivante :

$$\Delta P = f(Qvol, m)$$

dans laquelle m correspondant à la masse de suies piégées dans le filtre à particules (10),
la fonction f(Qvol,m) comprenant au moins un jeu de coefficients déterminés par expérience, qui prend en compte la réduction du volume utile du filtre à particules (10) liée à l'accumulation de résidus non combustibles dans le filtre.

**2.** Procédé de détermination du chargement en suies d'un filtre à particules (10) selon la revendication 1, **caractérisé en ce que** la formule $\Delta P = f(Qvol,m)$ est :

$$\Delta P = (a_1 \times m^2 + a_2 \times m + a_3)Qvol^2 + (a_4 \times m + a_5)Qvol$$

les coefficients $a_i$ étant déterminés par expérience et sont représentatifs de la diminution du volume utile du filtre à particules (10) lié à la présence de résidu dans le filtre à particules (10).

**3.** Procédé de détermination du chargement en suies d'un filtre à particules selon la revendication 2, **caractérisé en ce que** les coefficients $a_i$ sont définis pour différents états de vieillissement du filtre à particules (10) chaque état successif correspondant à une distance parcourue par le véhicule équipé du filtre à particules.

**4.** Procédé de détermination du chargement en suies d'un filtre à particules (10) selon l'une des revendications 1 à 3, **caractérisé en ce que** le débit volumique est défini par la formule :

$$Qvol = (Mair + Mc)TN/P$$

dans laquelle Mair représente le débit d'air entrant dans le moteur (1)
Mc représente le dédit de carburant introduit dans les chambres de combustion du moteur (1)
T représente la température des gaz d'échappement en amont du filtre à particules (10)
P représente la pression en amont du filtre à particules (10)
N représente le régime moteur.

**5.** Procédé de détermination du chargement en suies d'un filtre à particules (10) selon l'une des revendications 1 à 4, **caractérisé en ce que** le procédé comprend une étape de déclenchement d'une phase de régénération du filtre à particules (10) lors que la masse de suies m est supérieure à une valeur seuil déterminée, cette valeur est déterminée de sorte que pour toutes les phases de régénération la densité de particules dans le filtre soit constante.

**6.** Procédé de détermination du chargement en suies d'un filtre à particules (10) selon la revendication 5, **caractérisé en ce que** la valeur seuil de déclenchement de la phase de régénération est déterminée en fonction du volume utile $V_{uitle}$ du filtre à particule définie par la formule :

$$V_{utile} = V_{FàP} - (Vres/1000)/b$$

dans laquelle $V_{FàP}$ représente le volume initial du filtre à particules
$V_{res}$ représente le volume des résidus définie par la formule $m_{res}/\rho_{res}$
$m_{res}$ représente la masse de résidus accumulés dans le filtre à particules (10)
b représente la fraction, en volume, du filtre à particules (10) qui peut être occupée par les résidus.

**7.** Procédé de détermination du chargement en suies d'un filtre à particules (10) selon la revendication 5 ou 6, **caractérisé en ce que** la masse $m_{res}$ de résidus est déterminée en fonction de la quantité de carburant consommé depuis la mise en service du filtre à particules (10).

**Claims**

**1.** A process for determining the soot loading of a particulate filter (10) of the type used downstream of an internal combustion engine (1), which filter has to be periodically regenerated by combustion of the soot before attaining an excessively high loading, by which the loading is deduced from the differential pressure $\Delta P$ upstream-downstream of the particulate filter (10) and a parameter Qvol representative of the flow rate of the gases passing through the particulate filter, **characterised in that** the loading is deduced from the following formula:

$$\Delta P = f(Qvol, m)$$

wherein m corresponds to the mass of soot trapped in the particulate filter (10),
the function (f(Qvrol,m) comprising at least one set of experimentally determined coefficients, which takes account of the reduction in the useful volume of the particulate filter (10) linked to the accumulation of incombustible residues in the filter.

2. A process for determining the soot loading of a particulate filter (10) according to claim 1 **characterised in that** the formula $\Delta P = f(Qvol, m)$ is:

$$\Delta P = (a_1 xm^2 + a_2 xm + a_3)Qvol^2 + (a_4 xm + a_5)Qvol$$

the coefficients $a_i$ being determined experimentally and are representative of the reduction in the useful volume of the particulate filter (10) linked to the presence of residue in the particulate filter (10).

3. A process for determining the soot loading of a particulate filter according to claim 2 **characterised in that** the coefficients $a_i$ are defined for different states of ageing of the particulate filter (10), each successive state corresponding to a distance covered by the vehicle equipped with the particulate filter.

4. A process for determining the soot loading of a particulate filter (10) according to one of claims 1 to 3 **characterised in that** the flow rate by volume is defined by the formula:

$$Qvol = (Mair + Mc)TN/P$$

in which Mair represents the flow rate of air passing into the engine (1),
Mc represents the flow rate of fuel introduced into the combustion chambers of the engine (1),
T represents the temperature of the exhaust gases upstream of the particulate filter (10),
P represents the pressure upstream of the particulate filter (10), and
N represents the engine operating state.

5. A process for determining the soot loading of a particulate filter (10) according to one of claims 1 to 4 **characterised in that** the process comprises a step of triggering a phase for regeneration of the particulate filter (10) when the mass of soot m is higher than a given threshold value, said value is determined in such a way that for all the regeneration phases the density of particles in the filter is constant.

6. A process for determining the soot loading of a particulate filter (10) according to claim 5 **characterised in that** the threshold value for triggering of the regeneration phase is determined in dependence on the useful volume $V_{useful}$ of the particulate filter defined by the formula:

$$V_{useful} = V_{PF} \cdot (V_{res}/1000)/b$$

wherein Vpv represents the initial volume of the particulate filter,
$V_{res}$ represents the volume of the residues defined by the formula $m_{res}/p_{res}$,
$m_{res}$ represents the mass of residues accumulated in the particulate filter (10), and
b represents the fraction by volume of the particulate filter (10) which can be occupied by the residues.

7. A process for determining the soot loading of a particulate filter (10) according to claim 5 or claim 6 **characterised**

in that the mass $m_{res}$ of residues is determined in dependence on the quantity of fuel consumed since the particulate filter (10) was brought into service.

**Patentansprüche**

1. Verfahren zur Bestimmung der Rußbeladung eines Partikelfilters (10), von einem solchen Typ, der stromabwärts von einem Verbrennungsmotor (1) verwendet wird, wobei der Filter regelmäßig durch Verbrennung des Rußes vor Erreichung einer zu hohen Beladung regeneriert werden muss, durch welches die Beladung anhand des Differenzdruckes $\Delta P$ stromaufwärts-stromabwärts des Partikelfilters (10) und einer für den Durchsatz der den Partikelfilter durchquerenden Gase repräsentativen Größe Qvol bestimmt wird, **dadurch gekennzeichnet, dass** die Beladung anhand der folgenden Formel ermittelt wird:

$$\Delta P = f(Qvol, m)$$

in welcher m der Masse an im Partikelfilter (10) gefangenem Ruß entspricht,
die Funktion f(Qvol, m) wenigstens einen empirisch bestimmten Koeffizientensatz umfasst, welcher die mit der Ansammlung von nichtbrennbaren Reststoffen im Filter zusammenhängende Verringerung des Nutzvolumens des Partikelfilters (10) berücksichtigt.

2. Verfahren zur Bestimmung der Rußbeladung eines Partikelfilters (10) gemäß Anspruch 1, **dadurch gekennzeichnet, dass** die Formel $\Delta P = f(Qvol, m)$ wie folgt lautet:

$$\Delta P = (a_1 \text{ x } m^2 + a_2 \text{ x } m + a_3)\, Qvol^2 + (a_4 \text{ x } m + a_5)\, Qvol$$

wobei die Koeffizienten $a_i$ empirisch bestimmt werden und repräsentativ für die mit der Anwesenheit von Reststoffen im Partikelfilter (10) zusammenhängende Verringerung des Nutzvolumens des Partikelfilters (10) sind.

3. Verfahren zur Bestimmung der Rußbeladung eines Partikelfilters gemäß Anspruch 2, **dadurch gekennzeichnet, dass** die Koeffizienten $a_i$ für verschiedene Alterungszustände des Partikelfilters (10) definiert sind, wobei jeder aufeinanderfolgende Zustand einer von dem mit dem Partikelfilter ausgerüsteten Fahrzeug zurückgelegten Strecke entspricht

4. Verfahren zur Bestimmung der Rußbeladung eines Partikelfilters (10) gemäß einem der Ansprüche 1 bis 3, **dadurch gekennzeichnet, dass** der Volumendurchsatz durch die folgende Formel definiert ist:

$$Qvol = (Mluft + Mc)\, TN/P$$

wobei Mluft der Durchsatz der in den Motor (1) eindringenden Luft ist
Mc den Durchsatz des in die Verbrennungskammern des Motors (1) eingeführten Treibstoffes darstellt
T die Temperatur der Abgase stromaufwärts des Partikelfilters (10) darstellt
P den Druck stromaufwärts des Partikelfilters (10) darstellt
N die Motordrehzahl darstellt.

5. Verfahren zur Bestimmung der Rußbeladung eines Partikelfilters (10) gemäß einem der Ansprüche 1 bis 4, **dadurch gekennzeichnet, dass** das Verfahren einen Schritt der Auslösung einer Regenerationsphase des Partikelfilters (10) umfasst, wenn die Rußmasse m höher als ein vorbestimmter Grenzwert ist, wobei dieser Wert derart bestimmt wird, dass für alle Regenerationsphasen die Teilchendichte im Filter konstant ist.

6. Verfahren zur Bestimmung der Rußbeladung eines Partikelfilters (10) gemäß Anspruch 5, **dadurch gekennzeichnet, dass** der Grenzwert zur Auslösung der Regenerationsphase in Abhängigkeit des Nutzvolumens $V_{nutz}$ des Partikelfilters bestimmt wird, welches durch die folgende Formel definiert ist:

$$V_{nutz} = V_{PF} - (V_{rest}/1000) / b$$

wobei $V_{PF}$ das Ursprungsvolumen des Partikelfilters darstellt
$V_{rest}$ das Reststoffvolumen darstellt, welches durch die Formel $m_{rest}/\rho_{rest}$ definiert ist
$m_{rest}$ die Masse der im Partikelfilter (10) angesammelten Reststoffe darstellt
b den Volumenbruchteil des Partikelfilters (10) darstellt, welcher durch die Reststoffe eingenommen sein kann.

7. Verfahren zur Bestimmung der Rußbeladung eines Partikelfilters (10) gemäß Anspruch 5 oder 6, **dadurch gekenn-zeichnet, dass** die Reststoffmasse $m_{rest}$ in Abhängigkeit der seit der Inbetriebnahme des Partikelfilters (10) ver-brauchten Treibstoffmenge bestimmt wird.

## FIG.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 587146 A
- EP 1103702 A

- FR 2781251